## Europäisches Patentamt

## European Patent Office

## Office européen des brevets

(11) Veröffentlichungsnummer: **0 256 379**
**B1**

(12) **EUROPÄISCHE PATENTSCHRIFT**

(45) Veröffentlichungstag der Patentschrift:
07.03.90

(21) Anmeldenummer: 87111003.7

(22) Anmeldetag: 29.07.87

(51) Int. Cl.⁴: **F28D 7/10**

(54) Gaskühler.

(30) Priorität: 11.08.86 DE 3627211

(43) Veröffentlichungstag der Anmeldung:
24.02.88 Patentblatt 88/8

(45) Bekanntmachung des Hinweises auf die Patenterteilung:
07.03.90 Patentblatt 90/10

(84) Benannte Vertragsstaaten:
CH DE ES FR LI NL

(56) Entgegenhaltungen:
CH-B- 280 011
FR-A- 1 115 606
FR-A- 2 112 495
GB-A- 2 009 385
GB-A- 2 066 937
GB-A- 2 075 658
US-A- 4 479 534

(73) Patentinhaber: Siemens Aktiengesellschaft,
Wittelsbacherplatz 2, D-8000 München 2(DE)

(72) Erfinder: Saalfrank, Helmut, Dipl.-Ing. (FH),
Ringstrasse 3, D-8551 Hemhofen(DE)

**Beschreibung**

Die Erfindung betrifft einen Gaskühler mit einem Gehäuse und einem darin befindlichen Rohr, das das zu kühlende Gas von dem Kühlmittel trennt, wobei das Gehäuse im wesentlichen ein Zylinder ist, dessen Länge das Mehrfache seines Durchmessers ist und das an beiden Enden ein Anschlußrohr mit annähernd dem gleichen Durchmesser zur Zu- und Ableitung eines Kühlgases aufweist, und wobei das Rohr zentrisch durch das Gehäuse führt und in den Stirnseiten des Gehäuses gehalten ist.

Ein Gaskühler der vorgenannten Art ist aus der GB-A 2 066 937 bekannt. Sein inneres Rohr, das mit längs Mantellinien sternförmig angeordneten Rippen versehen ist, ist in der einen Gehäusestirnseite mit einer Mantelstopfbuchse gehalten. Die darin als Dichtmaterial verwendete Asbestschnur ist jedoch häufigen Temperaturwechseln mit Längenänderungen nicht gewachsen, weil entweder eine hohe Reibwirkung hohe Kräfte verursacht oder bei geringer Verspannung Undichtigkeiten zu befürchten sind. Diese Schwierigkeiten wachsen noch mit steigender Temperaturdifferenz zwischen Gas und Kühlmittel.

Deshalb soll ein Gaskühler geschaffen werden, der ohne Stopfbuchse auskommt und insbesondere in Zusammenhang mit einem Wasserstoff-Rekombinator für ein Kernkraftwerk eingesetzt werden kann, wo es bekanntlich in extremem Maß auf Zuverlässigkeit und Dichtigkeit ankommt.

Mit einem Rekombinator wird in einem Kernkraftwerk der bei einem Kühlmittelverlust-Störfall im Sicherheitsbehälter entstehende Wasserstoff zu Wasser aufoxidiert.

Der durch den exothermen Vorgang entstehende heiße Gas- und Dampfstrom muß vor der Rückspeisung in den Sicherheitsbehälter unter die Zündtemperatur der möglicherweise zündfähigen Umgehungsatmosphäre abgekühlt werden. Werden zu diesem Zweck außerhalb des Sicherheitsbehälters wassergekühlte Apparate installiert, so kann hiermit die Gefahr einer Verschleppung von Radioaktivität aus dem Sicherheitsbehälter heraus entstehen. Deshalb soll der neue Gaskühler im Sicherheitsbehälter selbst angeordnet werden können und ohne Leitungen auskommen, die aus dem Sicherheitsbehälter herausführen. Erfindungsgemäß ist vorgesehen, daß das Gehäuse an der Eintrittsseite des zu kühlenden Gases einen den Zylinder an seinem einen Ende umfassenden Mantel bildet, an dem der Auslaß des Kühlgases sitzt, daß in der Stirnseite des Mantels ein Gleitlager zur Abstützung des Rohres vorgesehen ist und daß der Zylinder eine gegen das Gleitlager gerichtete Verengung aufweist, so daß das aus dem Zylinder gegen die Stirnwand strömende Kühlmittel mit erhöhter Geschwindigkeit gegen das Gleitlager geführt wird.

Der neue Gaskühler kann ebenso wie der thermische Rekombinator in das Wasserstoffdurchmischungssystem im Reaktorsicherheitsbehälter integriert werden. Ein besonderer Vorteil besteht in der Verbindung der Rohr- und Mantelseite über ein Gleitlager, das auf der Eintrittsseite des zu kühlenden Gases innerhalb des Mantels vorgesehen ist und deshalb keine Dichtfunktionen gegenüber der Umgebungsatmosphäre außerhalb des Gehäuses hat. Diese Konstruktion erlaubt die großen thermischen Differenzdehnungen zwischen dem Gehäuse und dem Rohr ohne Einbau aufwendiger Kompensatoren und ohne schwierige Rohrleitungsführung eine Einbindung in ein Durchmischungssystem. Mit dem Mantel wird das Kühlgas bis an die Stirnwand geführt wird, so daß keine kühlungsschwachen Totzonen entstehen. Der Zylinder führt mit einer gegen das Gleitlager gerichteten Verengung das Kühlgas mit einer durch die Verengung erhöhten Geschwindigkeit gegen das Gleitlager, so daß dessen Temperatur sehr niedrig bleibt.

Als Kühlgas kann bei der Erfindung die normale Atmosphärenluft im Sicherheitsbehälter verwendet werden. Sie reicht bei geeigneter Auslegung durchaus für eine Kühlung der zunächst ca. 700°C heissen Gase des Rekombinators auf eine Temperatur von weniger als 400°C, bei der eine Zündung zündfähiger Gasgemische ausgeschlossen ist. Der Kühlgasstrom erwärmt sich dabei aufgrund der Massendurchflüsse nur minimal um etwa 10°C. Er kann dabei mit dem zur Luftumwälzung im Sicherheitsbehälter ohnehin vorgesehenen Einrichtungen in Gang gesetzt werden.

Das Rohr kann einen zentrisch angeordneten Verdrängerkörper aufweisen, um mit geringem Aufwand einen großen Wärmeübergangskoeffizienten für das zu kühlende Gas zu erhalten. Dabei ist der Durchmesser des Verdrängerkörpers vorteilhaft größer als die Dicke des Ringraumes zwischen dem Verdrängerkörper und dem Rohr.

Das Gleitlager umfaßt vorteilhaft mehrere dicht nebeneinander liegende Ringe, die in einer gemeinsamen Hülse sitzen, wobei die Ringe geteilt sind und die Teilfugen in Umfangsrichtung gegeneinander versetzt sind. Bei einem solchen Gleitlager kann man eine nahezu spaltfreie Abdichtung unter Betriebsbedingungen erhalten, so daß der Leckagestrom kleiner als 1 % ist.

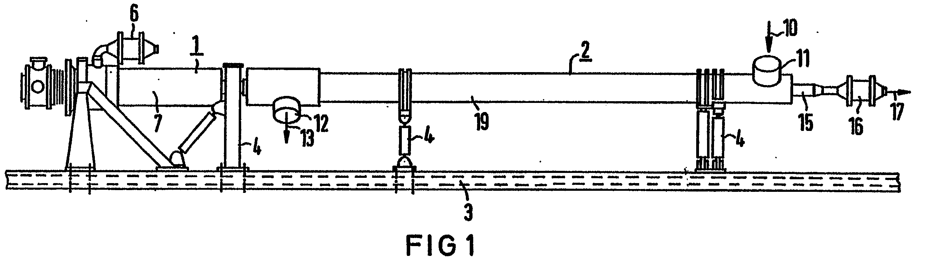

Zur näheren Erläuterung der Erfindung wird anhand der Zeichnung ein Ausführungsbeispiel beschrieben. Dabei zeigt die Figur 1 in einer Seitenansicht die Kombination eines Rekombinators mit einem Gaskühler nach der Erfindung. Eine solche Kombination ist für ein Wasserstoff-Überwachungs- und Begrenzungssystem in einem Kernkraftwerk mit einem Druckwasserreaktor vorgesehen.

In Figur 2 ist der Gaskühler in einem Längsschnitt in größerem Maßstab dargestellt.

Die Figur 3 zeigt in einem Teilschnitt in nochmals größerem Maßstab ein Gleitlager des Gaskühlers.

In Figur 1 ist zu sehen, daß die Kombination eines thermischen Rekombinators 1 mit einem Gaskühler 2 auf einer Stahlträgerdecke 3 mit Füßen 4 befestigt ist, die an mehreren Stellen der Kombination in unterschiedlicher Ausbildung vorgesehen sind. Die Decke 3 ist im Inneren eines nicht weiter dargestellten Sicherheitsbehälters eines Kernkraftwerkes mit einem Druckwasserreaktor vorgesehen. Dessen Atmosphäre kann über eine Flammsperre 6 in das Gehäuse 7 des Rekombinators 1 eingeführt werden. Dort wird Wasserstoff durch Erwärmung mit Hilfe elektrischer Heizglieder bei Temperaturen von etwa 850 °C zu Wasser oxidiert. Insgesamt ist der Rekombinator 1 so aufgebaut, wie in der deutschen Offenlegungsschrift 39 242 beschrieben ist.

Aus dem Rekombinator 1 gelangt die heiße Mischung aus Gas und Wasserdampf in den Gaskühler 2. Dort wird die Mischung mit Hilfe von Kühlgas, nämlich der Atmosphärenluft innerhalb des Sicherheitsbehälters, auf Temperaturen von weniger als 400°C, also unterhalb der Zündtemperatur eines Wasserstoff-Sauerstoff-Gemisches, abgekühlt. Das Kühlgas wird dazu in Richtung des Pfeiles 10 durch eine Rohrleitung 11 mit 400 mm Durchmesser in den Gaskühler 2 eingeleitet, den es in Gegenrichtung zu dem kühlenden Gasstrom hindurchströmt. Am anderen Ende verläßt das nur wenig, z.B. von 30 auf 40 °C aufgeheizte Kühlgas dem Gaskühler 2 durch einen Auslaßstutzen 12 mit ebenfalls 400 mm Durchmesser in Richtung des Pfeiles 13.

Die abgekühlte Mischung verläßt den Gaskühler 2 durch ein Austrittsrohr 15. Dort ist eine weitere Flammsperre 16 angebracht. Aus ihr tritt die abgekühlte Mischung in die Atmosphäre der Sicherheitshülle, wie durch den Pfeil 17 angedeutet ist.

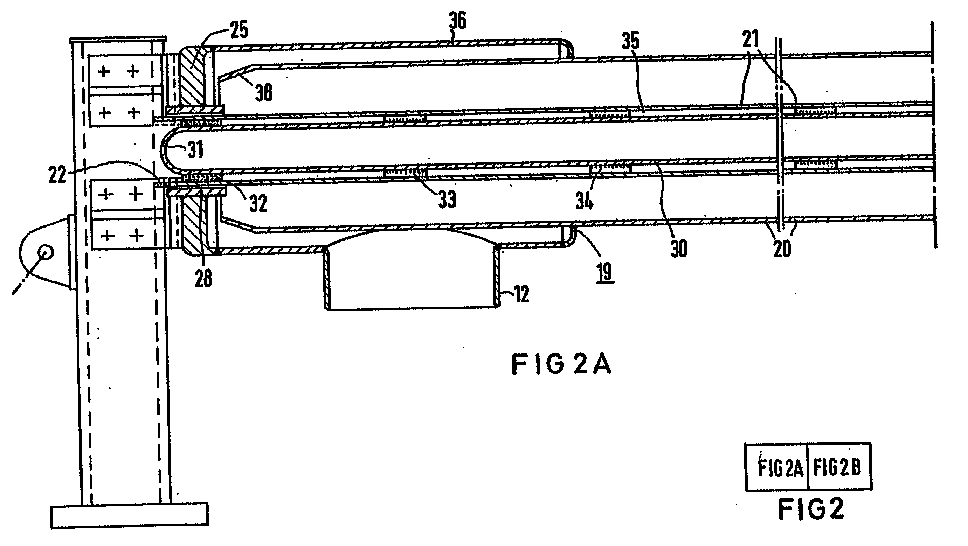

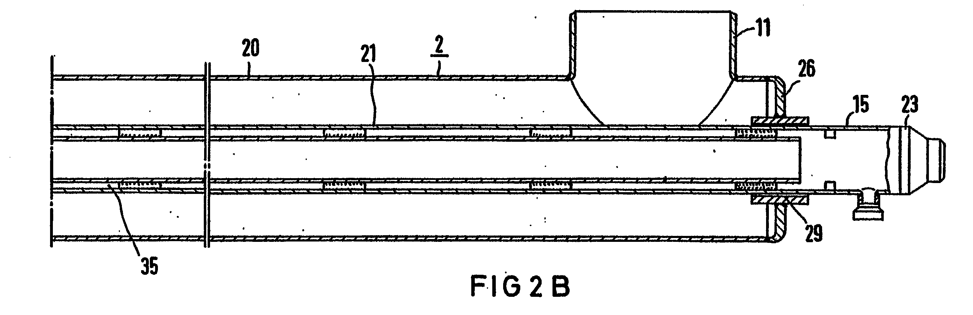

Im einzelnen ist der Aufbau des Gaskühlers 2 aus der Figur 2 zu ersehen. Sie zeigt, daß das Gehäuse 19 des Gaskühlers im wesentlichen von einem Zylinder 20 mit 400 mm Durchmesser und einer Länge von 6,5 m gebildet wird. Zentrisch durch den Zylinder 20 verläuft ein Rohr 21, das das zu kühlende Gas führt. Das Rohr 21 hat einen Durchmesser von 150 mm und eine Länge von 7 m zwischen dem Eintritt 22 und dem Austritt 23. Es ist in den stirnseitigen Wänden 25 und 26 des Gehäuses 19 mit Gleitlagern 28 und 29 abgestützt.

Im Inneren des Rohres 21 sitzt ein Verdrängerkörper 30. Dies ist ein Rohr mit 100 mm Durchmesser, das am Eintritt mit einem gewölbten Boden 31 verschlossen ist. Dort ist das Rohr 30 mit Streben 32 an dem Rohr 21 angeschweißt. Weitere Streben 33, 34 usw. sind nur am Rohr angeschweißt. Sie können also auf der Innenseite des Rohres 21 gleiten, so daß unterschiedliche Längsdehnungen zwischen den Rohren 21 und 30 möglich sind. Der Verdrängerkörper 30 bildet mit dem Rohr 21 einen Ringraum 35, dessen Dicke nur ein Viertel des Durchmessers des Verdrängerkörpers 30 beträgt.

Das Gehäuse 19 des Gaskühlers 2 wird am eintrittsseitigen Ende 22 von einem den Zylinder 20 umfassenden Mantel 36 gebildet, dessen Länge in axialer Richtung etwa das 1,5fache des Durchmessers des Zylinders 20 beträgt. Der Mantel 36 trägt den Kühlgas-Austrittstutzen 12. Deshalb wird das vom Kühlgas-Eintrittstutzen kommende Kühlgas durch den Ringraum zwischen dem Rohr und dem Zylinder 20 bis gegen die Stirnseite 25 geführt. Dort ist mit einer konischen Verengung 38 dafür gesorgt, daß das Kühlgas mit ausreichender Geschwindigkeit gegen das Gleitlager 28 geführt wird.

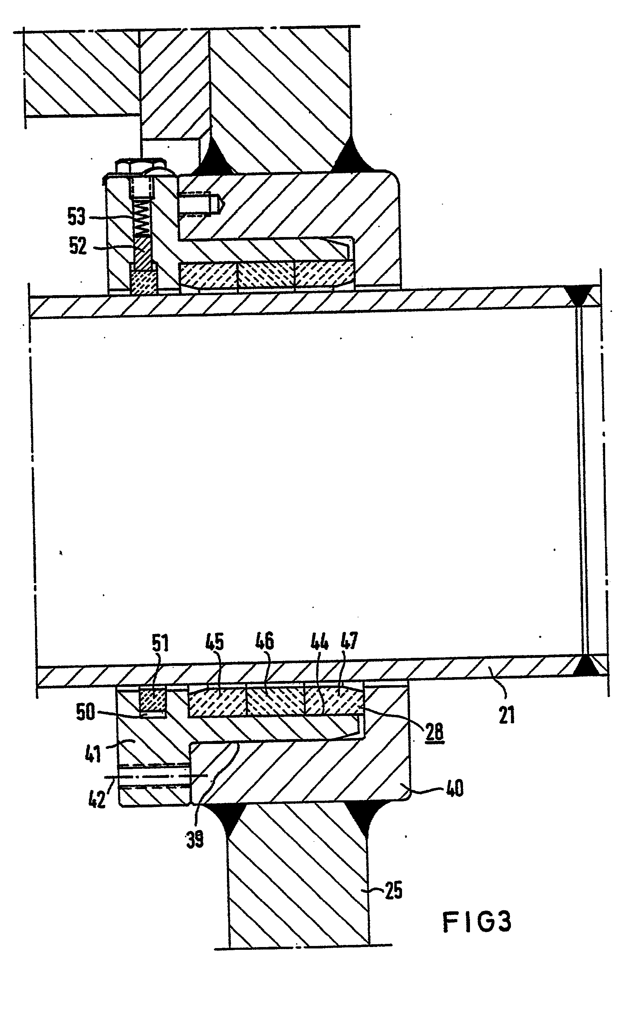

Das Gleitlager 28 umfaßt, wie die Figur 3 zeigt, im Bereich der Stirnwand 25 eine Stahlhülse 40 mit einer zylindrischen Ausnehmung 39, die konzentrisch zum Rohr verläuft. In die Hülse 40 ragt ein Lagerkörper 41, der mit Schrauben 42 an der Hülse 40 befestigt ist. Der Lagerkörper 41 enthält in einer zylindrischen Ausnehmung 44 drei dicht nebeneinander liegende Ringe 45, 46 und 47 aus einem Keramikmaterial auf Silizium-Karbid-Basis. Die Ringe sind mehrfach, insbesondere dreifach, unterteilt, so daß sie bei Wärmedehnungen des Rohres 21 radial nachgeben können. Die in Achsrichtung des Rohres verlaufenden Teilfugen sind jedoch am Umfang gegeneinander versetzt, damit eine spaltfreie Dichtung entsteht. Ferner ist in dem Lagerkörper 41 eine Ringnut 50 mit einem aus mehreren Teilen bestehenden Keramikring 51 angeordnet, der über Zwischenstücke 52 von Federn 53 angepreßt werden kann. Der Ring 51 dient vor allem als Schutz gegen das Eindringen von Verschmutzungen in die Ausnehmung 44 und zur Abdichtung während des Anfahrvorgangs.

Mit dem Gleitlager 28 wird erreicht, daß das mit dem Rekombinator 1 direkt verbundene Rohr 21 sich in den Gaskühler 2 hinein frei ausdehnen kann. Dennoch kann das an der Stirnwand 25 anstehende Kühlgas mit einem Überdruck von z.B. 0,1 bar nur mit einer kleinen Leckrate von etwa 1 % entweichen. Die gleiche Bewegungsmöglichkeit ist an der anderen Stirnwand 26 mit dem Gleitlager gegeben, das praktisch genauso ausgeführt sein kann wie das Gleitlager 28.

Der neue Gaskühler 2 ist aufgrund seines einfachen Aufbaus sehr robust. Er ist damit besonders für einen jahrelangen wartungsfreien Betrieb geeignet, wie er in einem Kernkraftwerk vorausgesetzt werden muß. Er kann aber auch an anderen Stellen, z.B. in der chemischen Industrie, in der Petrochemie oder dergleichen vorteilhaft angewendet werden.

**Patentansprüche**

1. Gaskühler (2), insbesondere in Zusammenhang mit einem Wasserstoff-Rekombinator (1) für ein Kernkraftwerk, mit einem Gehäuse (19) und einem darin befindlichen Rohr (21), das das zu kühlende Gas von dem Kühlmittel trennt, wobei das Gehäuse (19) im wesentlichen ein Zylinder (20) ist, dessen Länge das Mehrfache seines Durchmessers ist und das an beiden Enden ein Anschlußrohr (11, 12) mit annähernd dem gleichen Durchmesser zur Zu- und Ableitung eines Kühlgases aufweist, und wobei das Rohr (21) zentrisch durch das Gehäuse (19) führt und in den Stirnseiten (25, 26) des Gehäuses (19) gehalten ist, dadurch gekennzeichnet, daß das Gehäuse (19) an der Eintrittsseite (22) des zu kühlenden Gases einen den Zylinder (20) an seinem einen Ende umfassenden Mantel (36) bildet, an dem der Auslaß (12) des Kühlgases sitzt, daß in der Stirnseite (25) des Mantels ein Gleitlager (28) zur Abstützung des Rohres (21) vorgesehen ist und daß der Zylinder (20) eine gegen das Gleitlager (28) gerichtete Verengung (38) aufweist, so daß das aus dem Zylinder (20) gegen die Stirnwand (25) strömende Kühlmittel mit erhöhter Geschwindigkeit gegen das Gleitlager (28) geführt wird.

2. Gaskühler nach Anspruch 1, dadurch gekennzeichnet, daß das Rohr (21) einen zentrisch angeordneten Verdrängerkörper (30) enthält.

3. Gaskühler nach Anspruch 2, dadurch gekennzeichnet, daß der Durchmesser des Verdrängerkörpers (30) größer als die Dicke des Ringraumes (35) zwischen dem Verdrängerkörper (30) und dem Rohr (21) ist.

4. Gaskühler nach einem der Ansprüche 1 bis 3, dadurch gekennzeichnet, daß das Gleitlager (28) mehrere dicht nebeneinander liegende Ringe (45, 46, 47) umfaßt, die in einer gemeinsamen Hülse (40) sitzen, daß die Ringe (45, 46, 47) geteilt sind und daß die Teilfugen in Umfangsrichtung gegeneinander versetzt sind.

**Claims**

1. Gas cooler (2), in particular in connection with a hydrogen-recombiner (1) for a nuclear power station, having a housing (19) and a pipe (21) located therein which separates the gas to be cooled from the coolant, wherein the housing (19) is essentially a cylinder (20) whose length is a multiple of its diameter and which has at both ends a connecting pipe (11, 12) with approximately the same diameter as the supply- and discharge-line of a cooling gas, and wherein the pipe (21) leads centrally through the housing (19) and is held in the front ends (25, 26) of the housing (19), characterised in that the housing (19) on the inlet side (22) of the gas to be cooled forms a casing (36) enclosing the cylinder (20) at one end, on which casing the outlet (12) of the cooling gas is placed, in that in the front end (25) of the casing there is provided a friction bearing (28) to support the pipe (21) and in that the cylinder (20) has a constriction (38) directed towards the friction bearing (28) so that the coolant flowing out of the cylinder (20) towards the front wall (25) is guided at increased speed towards the friction bearing (28).

2. Gas cooler according to claim 1, characterised in that the pipe (21) contains a centrally arranged displacement body (30).

3. Gas cooler according to claim 2, characterised in that the diameter of the displacement body (30) is greater than the thickness of the annular space (35) between the displacement body (30) and the pipe (21).

4. Gas cooler according to one of claims 1 to 3, characterised in that the friction bearing (28) includes several closely adjacent rings (45, 46, 47) which are located in a common sleeve (40), in that the rings (45, 46, 47) are divided and in that the joints are offset with respect to each other in the peripheral direction.

**Revendications**

1. Refroidisseur de gaz (2), en liaison notamment avec un recombinateur d'hydrogène (1) d'une centrale nucléaire, comprenant une enveloppe (19) et un tube (21) s'y trouvant et séparant le gaz à refroidir de l'agent de refroidissement, l'enveloppe (19) étant essentiellement un cylindre (20) dont la longueur représente plusieurs fois le diamètre et qui comporte, aux deux extrémités, un tube de raccordement (11, 12) ayant sensiblement le même diamètre et menant à un conduit d'entrée et à un conduit de sortie d'un gaz de refroidissement, le tube (21) étant guidé de manière centrée dans l'enveloppe (19) et étant maintenu dans les côtés frontaux (25, 26) de l'enveloppe (19), caractérisé en ce que l'enveloppe (19) forme, du côté de l'entrée (22) du gaz à refroidir, une chemise (36) qui entoure le cylindre (20) à l'une de ses extrémités, et qui est placée sur la sortie (12) du gaz de refroidissement, en ce qu'il est prévu, du côté frontal (25) de la chemise, un palier lisse (28) d'appui du tube (21), et en ce que le cylindre (20) comporte une partie rétrécie (38) dirigée vers le palier lisse (28) de manière que l'agent de refroidissement s'écoulant du cylindre (20) vers la paroi frontale (25) passe avec une plus grande vitesse sur le palier lisse (28).

2. Refroidisseur de gaz suivant la revendication 1, caractérisé en ce que le tube (21) contient un corps de refoulement (30) disposé de manière centrée.

3. Refroidisseur de gaz suivant la revendication 2, caractérisé en ce que le diamètre du corps de refoulement (30) est supérieur à l'épaisseur de l'espace annulaire (35) compris, entre le corps de refoulement (30) et le tube (21).

4. Refroidisseur de gaz suivant l'une des revendications 1 à 3, caractérisé en ce que le palier lisse (28) se compose de plusieurs anneaux (45, 46, 47) qui sont disposés étroitement les uns à côté des autres et qui sont dans un manchon (40) commun, en ce que les anneaux (45, 46, 47) sont fendus, et en ce que les fentes sont décalées les unes par rapport aux autres dans la direction périphérique.

FIG 1

EP 0 256 379 B1

FIG2A

FIG2

| FIG2A | FIG2B |

FIG 2 B

EP 0 256 379 B1

53
52

51  45  46  44  47
50
41
42
39

28
21
40
25

FIG3